# EUROPÄISCHE PATENTSCHRIFT

(11) **EP 1 966 573 B1**
(45) Veröffentlichungstag und Bekanntmachung des Hinweises auf die Patenterteilung: **28.06.2017**
(21) Anmeldenummer: 06829582.3
(22) Anmeldetag: 13.12.2006
(51) Int. Cl.: G01J 5/00, G01J 5/02, G01J 5/04, G01J 5/08

(54) **KONVERTER MIT EINEM BEHÄLTER ZUR AUFNAHME GESCHMOLZENEN METALLS UND EINER MESSVORRICHTUNG ZUR OPTISCHEN TEMPERATURBESTIMMUNG DES GESCHMOLZENEN METALLS SOWIE VERFAHREN ZUR TEMPERATURBESTIMMUNG IN EINEM DERARTIGEN KONVERTER**
CONVERTER WITH A CONTAINER FOR RECEIVING MOLTEN METAL AND WITH A MEASUREMENT DEVICE FOR THE OPTICAL TEMPERATURE DETERMINATION OF THE MOLTEN METAL, AND METHOD FOR THE TEMPERATURE DETERMINATION IN SUCH A CONVERTER
CONVERTISSEUR AVEC UN RÉSERVOIR SERVANT À CONTENIR UN MÉTAL FONDU ET UN DISPOSITIF DE MESURE POUR LA DÉTERMINATION OPTIQUE DE LA TEMPÉRATURE DU MÉTAL FONDU ET PROCÉDÉ DE DÉTERMINATION DE LA TEMPÉRATURE DANS UN TEL CONVERTISSEUR

(30) Priorität: 21.12.2005 DE 102005061675
(43) Veröffentlichungstag der Anmeldung: 10.09.2008
(73) Patentinhaber: MINKON GmbH, 40699 Erkrath (DE)
(72) Erfinder: LAMP, Torsten, 40219 Düsseldorf (DE); KÖCHNER, Herbert, 50259 Pulheim (DE)
(74) Vertreter: Tilmann, Max Wilhelm
(86) Internationale Anmeldenummer: PCT/EP2006/012014
(87) Internationale Veröffentlichungsnummer: WO 2007/079894

(56) Entgegenhaltungen:
- EP-A- 1 424 543
- EP-A1- 0 646 778
- EP-A1- 0 802 401
- EP-A2- 0 806 640

## Beschreibung

Die Erfindung betrifft einen Konverter mit einem Behälter zur Aufnahme geschmolzenen Metalls und einer Meßvorrichtung zur optischen Temperaturbestimmung des geschmolzenen Metalls sowie ein Verfahren zur Temperaturbestimmung in einem derartigen Konverter.

In der Stahlerzeugung wird Roheisen meist in einem Sauerstoffblaskonverter in Stahl umgewandelt. Hierzu werden typischerweise 150 t bis 400 t flüssigen Roheisens in einen großen, tiegelförmigen Behälter (Konvertergefäß) eingefüllt und durch Aufblasen und/oder Durchblasen großer Mengen Sauerstoffs in Rohstahl umgewandelt. Dabei steigt die Temperatur des Metallbades durch die Verbrennung der unerwünschten Roheisenbestandteile.

Die wesentliche Zielgröße für eine Regelung ist die Stahlbadtemperatur am Ende des Konverterprozesses. Üblicherweise wird zur Temperaturmessung der Konverterprozeß unterbrochen und eine manuelle Temperaturmessung durchgeführt. Hierzu werden beispielsweise Meßlanzen mit endseitig angebrachten Thermoelementen in das geschmolzene Metall eingeführt.

Die für die Temperaturmessung und daraus abgeleitete Korrekturmaßnahmen benötigte Zeitspanne erschwert die Prozeßsteuerung und den Prozeßablauf. Deshalb sind Maßnahmen unternommen worden, eine kontinuierliche in situ Temperaturmessung während des Konverterprozesses durchzuführen, die zu einer wesentlichen Verbesserung der Prozeßführung und dadurch zu einer deutlichen Effizienzsteigerung der Stahlherstellung führen.

Aus der Praxis ist es beispielsweise bekannt, zur kontinuierlichen in situ Temperaturmessung eine pyrometrische Analyse der vom Stahlbad ausgesandten elektromagnetischen Strahlung durchzuführen. So wird beispielsweise die Stahlbadoberfläche beobachtet. Bei diesem Verfahren führt ein stark schwankender Emissionsgrad des heterogenen und stark bewegten Badspiegels jedoch zu inakzeptablen Meßunsicherheiten. Ferner ist überlegt worden, in der feuerfesten Ausmauerung der Konverterwand Einbauten, wie beispielsweise Fenster, vorzusehen. Diese sind jedoch aufgrund der optischen Degenerierung durch die hohen Temperaturen, die typischerweise bis zu 1800°C betragen können, nachteilbehaftet. In der feuerfesten Ausmauerung vorgesehene Zugänge unterliegen wiederum einer starken mechanischen Beanspruchung durch Setzvorgänge, die die meist röhrenförmigen Zugänge zur Schmelze so stark deformieren, daß ein optischer Zugang zum Stahlbad entlang der Sichtlinie nicht mehr möglich ist.

Aus EP 0 646 778 A1 ist ein Konverter mit einem Behälter zur Aufnahme geschmolzenen Metalls bekannt. Dieser Konverter weist eine Messeinrichtung zur optischen Temperaturbestimmung des geschmolzenen Metalls auf, wobei ein metallummantelter Lichtwellenleiter vorgesehen ist, um von dem Metall oder von der Spitze des Lichtwellenleiters imitierte elektromagnetische Strahlung zu einem optischen Detektor zu leiten. Ferner ist bei dem dort beschriebenen Konverter ein optischer Detektor zur Bestimmung der Temperatur des Metalls aus einer Analyse der elektromagnetischen Strahlung bekannt. Der dort beschriebene Konverter weist einen Motor auf, mit dem Rollen angetrieben werden. Diese Rollen 13 greifen an dem metallummantelten Lichtwellenleiter an, um Transportkräfte auf den Lichtwellenleiter auszuüben, mit denen der metallummantelte Lichtwellenleiter entlang einer geraden Linie in den Behälter zur Aufnahme des geschmolzenen Metalls geschoben werden kann. Gemäß EP 0 646 778 wird der metallummantelte, von den Rollen geschobene Lichtwellenleiter in der geradlinig zum Behälter führenden Leitung von einem Gasstrom umströmt. Das Gas wird in die Leitung eingeströmt, um eine Düse am Ende der Leitung freizuhalten, durch die der metallummantelte Lichtwellenleiter in den Behälter des Konverters eintreten soll. EP 0 646 778 A1 beschreibt Steuerungsmittel, mit denen der Gasstrom gesteuert wird. Diese Steuerung erfolgt in Abhängigkeit des Drucks in der Leitung und einer gemessenen Transportgeschwindigkeit des metallummantelten Lichtwellenleiters. Aus diesen beiden Informationen soll gemäß EP 0 646 778 A1 eine Information darüber abgeleitet werden, ob die Düse verstopft ist. Gemäß EP 0 646 778 A1 ist die Metallummantelung des Lichtwellenleiters unter anderem auch deshalb vorgesehen, um den Lichtwellenleiter selbst vor dem Gasdruck des ihn umgebenden Gases zu schützen, während der metallummantelte Lichtwellenleiter durch die Transportmittel in Richtung auf den Behälter des Konverters geschoben wird.

Eine vergleichbare Vorgehensweise ist aus EP 0 802 401 bekannt, bei der ebenfalls ein metallummantelter Lichtwellenleiter mittels einer Transportvorrichtung, die aus zwei gegenüberliegenden Rollen bestehen kann oder aus einem Antrieb der Spule, auf der der metallummantelte Lichtwellenleiter aufgespult ist, bewegt wird. Dieser mechanische Antrieb übt Transportkräfte auf die Metallummantelung des Lichtwellenleiters aus und schiebt diesen durch ein gradliniges Rohr in den Behälter eines Konverters. Im Gegensatz zu EP 0 646 778 A1 ist in EP 0 802 401 A1 nicht vorgesehen, den Lichtwellenleiter während seines Transports durch die Leitung mit Gas zu umströmen. Gemäß EP 0 802 401 A1 wird die Leitung, in dem der metallummantelte Lichtwellenleiter transportiert wird, an eine Einblasdüse eines Konverters angesetzt und der metallummantelte Lichtwellenleiter durch die mechanische Transporteinrichtung durch diese Düse in den Behälter des Konverters geführt.

Aus EP 0 806 640 A2 ist ein Verfahren zur optischen Temperaturmessung an einem Strom flüssigen Metalls bekannt, bei dem ein Lichtwellenleiter an den Metallstrom herangeführt wird und mittels eines Detektors die von dem Lichtwellenleiter von dem geschmolzenen Metall zum Detektor weitergeleiteten elektromagnetischen Strahlen zur Bestimmung der Temperatur des Metalls analysiert werden. Bei dem dort beschriebenen Verfahren wird der Lichtwellenleiter mittels Quetschrollen transportiert und dem Metallstrom zugeführt.

Vor diesem Hintergrund liegt der Erfindung die Aufgabe zugrunde, einen Konverter vorzuschlagen, der eine kontinuierliche optische Temperaturmessung des geschmolzenen Metalls mit geringen Meßunsicherheiten erlaubt, und ein Verfahren zur Temperaturbestimmung des geschmolzenen Metalls in einem derartigen Konverter vorzuschlagen.

Diese Aufgabe wird durch einen Konverter gemäß Anspruch 1 gelöst. Vorteilhafte Ausführungsformen sind in den abhängigen Ansprüchen angegeben.

Die Erfindung geht von dem Grundgedanken aus, dem geschmolzenen Metall einen Lichtwellenleiter zuzuführen, der in einer fluiddurchströmten Leitung angeordnet ist und in der Leitung mit Hilfe des Fluids transportiert wird.

Die hohen Temperaturen führen dazu, daß der Lichtwellenleiter an seinem in das geschmolzene Metall eingetauchten bzw. in unmittelbarer Nähe zu dem geschmolzenen Metall gebrachten Ende allmählich aufschmilzt. Die erfindungsgemäß vorgesehene Nachführung des Lichtwellenleiters durch den von dem Fluid in der Leitung hervorgerufenen Transport führt jedoch dazu, daß eine zur Aufnahme der von dem Metall emittierten oder zur Emission der repräsentativen elektromagnetischen Strahlung fähige Oberfläche des Lichtwellenleiters stets in das geschmolzene Metall eingetaucht bzw. in der zur Aufnahme oder Emission der elektromagnetischen Strahlung notwendigen Nähe zu dem geschmolzenen Metall befindlich ist.

Der erfindungsgemäße Konverter weist einen optischen Detektor zur Bestimmung der Temperatur des Metalls aus einer Analyse der von dem Lichtwellenleiter weitergeleiteten elektromagnetischen Strahlung auf. Dieser optische Detektor ist erfindungsgemäß beabstandet von dem Behälter in einem Bereich angeordnet, in der die Umgebungstemperatur weniger als 150°C, insbesondere bevorzugt weniger als 70°C und ganz besonders bevorzugt weniger als 50°C beträgt.

Indem erfindungsgemäß eine den Lichtwellenleiter führende Leitung vorgesehen ist, in der ein Transport des Lichtwellenleiters durch ein durch die Leitung strömendes Fluid erfolgt, wird es erstmals möglich, den zur Analyse der elektromagnetischen Strahlung notwendigen optischen Detektor in deutlichem Abstand zu dem Behälter anzuordnen, nämlich in einem Bereich, in dem die Umgebungstemperatur so weit abgesunken ist, daß sie für elektronische Schaltanlagen nicht schädlich ist. Bei einem Sauerstoffblaskonverter wird der optische Detektor beispielsweise weiter als 5 Meter von dem Konvertergefäß (Behälter) entfernt angeordnet.

Die zwischen dem optischen Detektor und dem Behälter angeordnete, fluiddurchströmte Leitung kann eine gesondert für die Zuführung des Lichtwellenleiters vorgesehene Transportleitung sein, die auch oberhalb einer freien Oberfläche des geschmolzenen Metalls enden kann und den Lichtwellenleiter dort in Kontakt oder in die Nähe des geschmolzenen Metalls bringt, um die von dem Metall emittierte elektromagnetische Strahlung aufzunehmen. Ebenso kann die Transportleitung an einer in der Wandung des Behälters vorgesehenen Öffnung enden und den Lichtwellenleiter dem Metall über diese Öffnung zuführen, wobei das in der Leitung strömende Fluid zusätzlich den Vorteil aufweist, daß es ein Zusetzen dieser Öffnung zumindest teilweise verhindern kann.

Alternativ und bevorzugt wird als Leitung für den Transport des Lichtwellenleiters ein bereits an dem Konverter vorgesehenes Fluid-Leitungssystem verwendet, wie beispielsweise das Leitungssystem für das Zuführen von Bodengas, beispielsweise bestehend aus Spülgasen wie Stickstoff oder Argon oder Frischgas wie Sauerstoff oder Sauerstoffgemischen. Damit ist es möglich, bestehende Konverter ohne große Umbaumaßnahmen in erfindungsgemäße Konverter umzurüsten. Ebenso ist eine Kombination aus einer speziell für den Lichtwellenleiter vorgesehene Transportleitung mit einem vorhandenen Leitungssystem möglich, beispielsweise wenn der Lichtwellenleiter zunächst in einem eigenen Transport-Leitungssystem transportiert wird und beispielsweise erst kurz vor der Bodengasöffnung eines Bodengassystems mit dem Bodengassystem verbunden wird, beispielsweise über ein T-Stück im Bereich der Bodengasöffnung des Konverters. Die für den Lichtwellenleiter vorgesehene Transportleitung kann als zusätzliche Leitung in eine bestehende Leitung eingebracht werden, beispielsweise koaxial mittig in einer Leitung vorgesehen sein, die Fluid zu einer Fluidzuführöffnung in dem Behälter führt, beispielsweise in einer Leitung, mit der Bodengas zu einer Bodengasöffnung geführt wird. Diese Anordnung der Transportleitung in einer bestehenden Leitung kann auch nur in speziellen Bereichen erfolgen, beispielsweise im Bereich der feuerfesten Ausmauerung eines Konverters. Bei einer Anordnung der Transportleitung in einer bestehenden Fluidleitung dient der außen um die Transportleitung strömende Fluidmantel zur thermischen Isolierung der inneren Transportleitung, durch die der Lichtwellenleiter geführt wird.

Die Erfindung wird mit einem Konverter mit einem Behälter zur Aufnahme geschmolzenen Metalls verwirklicht, beispielsweise an einem Sauerstoffblaskonverter. Die hier aus Gründen der Vereinfachung und Einheitlichkeit verwendeten Begriffe "Konverter" und "geschmolzenes Metall" schließen auch alle die Vorrichtungen ein, die einen Behälter zur Aufnahme eines geschmolzenen Mediums aufweisen, bei dem sich die Temperatur des geschmolzenen Mediums aufgrund einer Analyse der von dem Medium emittierten elektromagnetischen Strahlen durch einen optischen Detektor feststellen läßt. Beispielsweise kann der Begriff "Konverter" auch Elektrolichtbogenöfen, Schmelzpfannen oder dergleichen umfassen.

Der Transport des Lichtwellenleiters erfolgt im Wesentlichen mit Hilfe des durch die Leitung strömenden Fluids. Hierzu ist der Lichtwellenleiter mit Oberflächeneigenschaften versehen sein, die eine besonders gute Übertragung der Transportkräfte des Fluids auf den Lichtwellenleiter erlauben, wie beispielsweise eine besondere Strukturierung der Oberfläche des Lichtwellenleiters. Bevorzugt wird ferner ein weicher, biegsamer Lichtwellenleiter eingesetzt, wie er beispielsweise aus der Kommunikationstechnik bekannt ist. Diese erlauben es besonders gut, den Licht wellenleiter um Ecken, Verengungen oder Bögen des Leitungssystems zu transportieren.

Als Fluid für den Transport des Lichtwellenleiters in der Leitung wird vorzugsweise entweder ein ohnehin für die Behandlung des geschmolzenen Metalls notwendiges Fluid, beispielsweise Sauerstoff, verwendet. Alternativ können auch andere Gase eingesetzt werden, wie beispielsweise Inertgase.

Insbesondere bevorzugt weist der Konverter einen Lichtwellenleiter-Vorrat auf. Dies kann ein aufgespulter Lichtwellenleiter sein, von dem das eine Ende über die fluiddurchströmte Leitung in das geschmolzene Metall eingeführt wird und das andere Ende mit dem optischen Detektor verbunden wird. Alternativ können andere Vorräte, wie beispielsweise ein in Schlaufen gelegter Lichtwellenleiter oder ein Knäuel vorgesehen sein. Die Zuführung des Lichtwellenleiters in das geschmolzene Metall erfolgt vorzugsweise mit einer konstanten Fördergeschwindigkeit. Bei einem Lichtwellenleiter des Typs G62,5/125 mit einem Außendurchmesser von 0,9 mm hat es sich beispielsweise als zweckmäßig erwiesen, das Fluid mit einer Geschwindigkeit von 5 m pro Sekunde durch die Leitung strömen zu lassen.

In einer bevorzugten Ausführungsform weist der erfindungsgemäße Konverter eine Abspulvorrichtung auf, die den Lichtwellenleiter sukzessive von einem Vorrat abspult. Derartige Abspulvorrichtungen können beispielsweise zwei gegenläufige, vorzugsweise gummierte Walzen aufweisen, von denen beispielsweise eine angetrieben ist und den durch den Spalt zwischen den Walzen geführten Lichtwellenleiter transportiert. Dieser Transport kann kontinuierlich oder diskontinuierlich erfolgen und insbesondere geregelt werden. In einer bevorzugten Ausführungsform ist auch die Abspulvorrichtung in einem Bereich angeordnet, in der die Umgebungstemperatur weniger als 150°C, vorzugsweise weniger als 70°C und insbesondere bevorzugt weniger als 50°C beträgt.

In einer bevorzugten Ausführungsform kann eine Einhausung für den optischen Detektor vorgesehen sein, wobei eine möglicherweise vorhandene Abspulvorrichtung ebenfalls in dieser Einhausung angeordnet sein kann. Die Einhausung schützt den optischen Detektor und die Abspulvorrichtung vor den schädlichen Umgebungseinflüssen, wie beispielsweise Schmutz. Insbesondere bevorzugt hat die Einhausung 10 im Betrieb einen Innendruck, der dem Innendruck der anschließenden Gasleitung, in der der Lichtwellenleiter mit Hilfe des Fluids transportiert wird, entspricht. Hierdurch wird der Transport des Lichtwellenleiters mit Hilfe des Fluids vereinfacht.

In einer bevorzugten Ausführungsform kann die Einhausung wärmegeschützt sein, also das Eindringen von Wärme in die Einhausung verhindern. Derartige Einhausungen können insbesondere dann eingesetzt werden, wenn der optische Detektor und beispielsweise die Abspulvorrichtung trotz der deutlich niedrigeren Umgebungstemperatur besonders gut vor Temperatureinflüssen zu schützen sind. Es ist nämlich stets möglich, daß auch bei deutlich entfernter Anordnung des optischen Detektors bzw. der Abspulvorrichtung von dem Behälter zur Aufnahme des geschmolzenen Metalls der Betrieb der Anlage der Konverter vorsieht, den Transport von anderen Behältern mit geschmolzenem Metall an dem erfindungsgemäßen Konverter vorbeizuführen. Hierbei kann es zu kurzfristigen Temperaturanstiegen kommen, wenn ein derartiger Behälter an dem optischen Detektor vorbeigeführt wird. Die wärmegeschützte Einhausung verhindert dann, daß der in einem Bereich mit einer mittleren Umgebungstemperatur von weniger als 150°C angeordnete optische Detektor durch derartige kurzzeitige Temperaturspitzen beschädigt wird.

Insbesondere bevorzugt kann die wärmegeschützte Einhausung auch eine aktive Kühlung aufweisen.

In einer bevorzugten Ausführungsform wird der Lichtwellenleiter zumindest abschnittsweise durch eine Gasleitung, mit der Gas zur Behandlung des geschmolzenen Metalls in den Behälter eingebracht wird, geführt und mit Hilfe des Gases transportiert. Besonders bevorzugt wird der Lichtwellenleiter hierbei über eine Einführöffnung in der Gasleitung in die Gasleitung eingeführt. Diese Einführöffnung ist vorzugsweise im Bereich einer Gasquelle angeordnet, von der Gas in die Gasleitung eingespeist wird. Als Gasquelle wird hierbei jegliche Quelle verstanden, aus der Gas in ein nur dem Konverter zugeordnetes Leitungssystem eingespeist wird. Die Gasquelle kann beispielsweise der Abzweig von einem Betriebsnetzwerk für Gas sein, bei dem das Gas für den einzelnen Konverter aus der allgemeinen Betriebsleitung entnommen wird. Derartige Abzweigungen aus dem Betriebsnetzwerk für den jeweiligen Konverter sind häufig in hinreichender Entfernung von dem Behälter zur Aufnahme des geschmolzenen Metalls des betreffenden Konverters entfernt, so daß ein in diesem Bereich angeordneter optischer Detektor oder eine in diesem Bereich angeordnete Abspulvorrichtung in einem Bereich angeordnet ist, in dem die Umgebungstemperatur weniger als 150°C beträgt. Deshalb ist es von Vorteil, den optischen Detektor im Bereich dieser Abzweigung anzuordnen. Durch das erfindungsgemäß vorgeschlagene Transportieren des Lichtwellenleiters mit Hilfe des strömenden Fluids wird der Lichtwellenleiter trotz der deutlichen Distanz zu dem Behälter selbst zuverlässig zu dem Behälter transportiert.

In einer bevorzugten Ausführungsform weist der Konverter Zapfen auf, an denen der Behälter schwenkbar aufgehängt ist. Bei einer derartigen Anordnung kann die fluiddurchströmte Leitung durch den Zapfen geführt werden, so daß trotz der Schwenkbewegung des Behälters eine gute Zuführung des Lichtwellenleiters zu dem Behälter möglich ist.

Die Aufgabe wird ferner durch das Verfahren gemäß Anspruch 8 gelöst. Vorteilhafte Ausgestaltungen sind in den abhängigen Ansprüchen angegeben. Das erfindungsgemäße Verfahren wird an einem erfindungsgemäßen Konverter durchgeführt. Der Lichtwellenleiter wird dem Behälter zugeführt und dabei zumindest abschnittweise durch die zwischen dem optischen Detektor und dem Behälter angeordnete fluiddurchströmte Leitung mit Hilfe des Fluids transportiert. Mit dem Detektor wird die vom Lichtwellenleiter vom geschmolzenen Metall zum Detektor weitergeleitete elektromagnetische Strahlung zur Bestimmung der Temperatur des Metalls analysiert. Der Transport des Lichtwellenleiters kann kontinuierlich oder intermittierend erfolgen.

In einer bevorzugten Ausführungsform wird der Lichtwellenleiter dem geschmolzenen Metall über eine Fluidöffnung des Behälters zugeführt, wobei dem Behälter über diese Fluidöffnung auch ein weiteres Fluid zugeführt wird, beispielsweise ein Bodengas. Bevor der Lichtwellenleiter jedoch in Kontakt mit dem geschmolzenen Metall kommt, wird der Lichtwellenleiter in einer noch nicht eingetauchten Position gehalten, und die durch den so gehaltenen Lichtwellenleiter zum Detektor weitergeleitete elektromagnetische Strahlung vom Detektor analysiert und/oder der Druckverlauf des weiteren Fluids, das durch die Fluidöffnung dem Behälter zugeführt wird, gemessen. Der Transport des so gehaltenen Lichtwellenleiters in das geschmolzene Metall wird erst begonnen, wenn der gemessene Wert einem vorgegebenen Startwert entspricht (die gemessenen Werte vorgegebenen Startwerten entsprechen). Ein besonderes Problem beim Eintransport des Lichtwellenleiters in den Behälter durch eine Fluidöffnung besteht in der Möglichkeit eines eventuellen Anfrierens von geschmolzenem Metall im Bereich der Fluidöffnung oder eines anders bedingten Zusetzens der Öffnung. Es hat sich gezeigt, daß ein Zusetzen der Fluidöffnung durch Beobachtung des Druckverlaufs des zusätzlich zum dem für den Transport des Lichtwellenleiters eingesetzten Fluids über die Fluidöffnung in den Behälter einströmenden Fluids, beispielsweise des Bodengases, festgestellt werden kann. Alternativ oder ergänzend kann ein Zusetzen durch Analyse der von dem in nicht eingetauchter Stellung gehaltenen Lichtwellenleiter zum Detektor weitergeleiteten elektromagnetischen Strahlung ermittelt werden. Es ist möglich, Schwellenwerte oder Wertebereiche festzulegen, ab derer oder innerhalb derer ein Transport beginnen kann.

Die vorbeschriebene Prüfung des Zusetzens der Fluidöffnung wird bei intermittierend durchgeführter Messung besonders bevorzugt vor jeder erneuten Transportaufnahme durchgeführt. Der Transport des Lichtwellenleiters wird bei intermittierender Messung ebenfalls intermittierend durchgeführt wird. Vor jeder neuen Messung wird der Transport des in einer noch nicht eingetauchten Position gehaltenen Lichtwellenleiters erst begonnen, wenn der gemessene Wert einen vorgegebenen Schwellenwert unter-, bzw. überschritten hat (je nachdem, wie die Schwelle definiert ist), bzw. in einem vorgegebenen Wertebereich liegt. Bei gleichzeitiger Durchführung der Druckmessung und der Analyse der elektromagnetischen Strahlung wird der Transport des in einer noch nicht eingetauchten Position gehaltenen Lichtwellenleiters erst begonnen, wenn der Druckwert einen Schwellenwert der gemessene Wert unter-, bzw. überschritten hat (je nachdem, wie die Schwelle definiert ist), bzw. in einem vorgegebenen Wertebereich liegt und wenn gleichzeitig ein sich aus der Analyse der elektromagnetischen Strahlung ergebender Wert einen Schwellenwert der gemessene Wert unter-, bzw. überschritten hat (je nachdem, wie die Schwelle definiert ist), bzw. in einem vorgegebenen Wertebereich liegt. Ebenso kann bei gleichzeitig durchgeführter Messung festgelegt werden, daß der Transport beginnt, wenn zumindest der Druckwert oder der sich aus der Analyse der elektromagnetischen Strahlung ergebende Wert die genannten Bedingungen erfüllt.

In einer bevorzugten Ausführungsform des Verfahrens wird dem geschmolzenen Metall über eine Bodengasöffnung Bodengas zugeführt und die Zusammensetzung des Bodengases für einen Zeitraum vor und/oder während der Messung mit Sauerstoff angereichert. In einer bevorzugten Ausführungsform wird das Bodengas mit 5% bis 20 % Sauerstoff angereichert. Ferner kann eine Regelung der Anreicherung vorgesehen sein. Eine Eingangsgröße dieser Regelung kann der Druckverlauf des Bodengases sein. Hierdurch kann ein Anfrieren des geschmolzenen Metalls im Bereich der Bodengasöffnung verhindert werden, bzw. eine Anfrierung aufgeschmolzen werden.

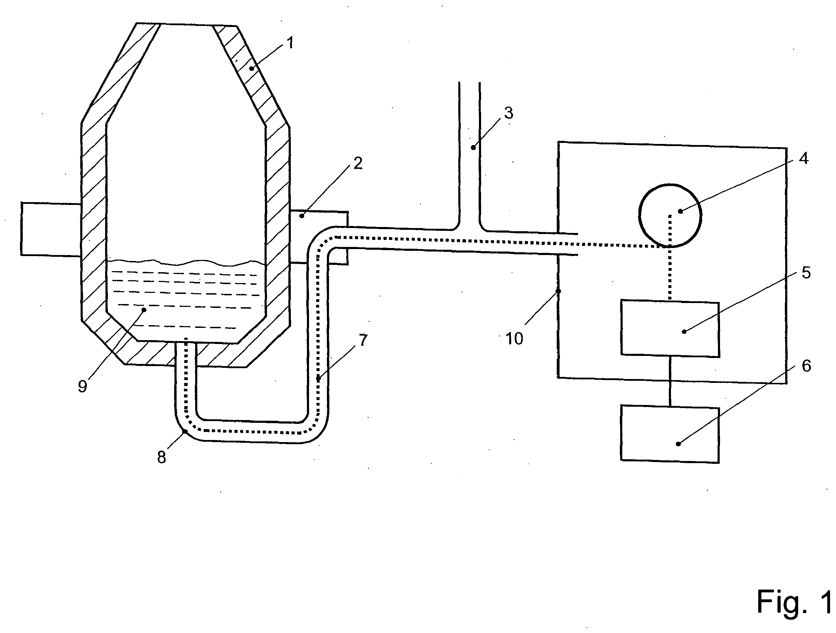

Nachfolgend wird die Erfindung anhand einer lediglich ein Ausführungsbeispiel zeigenden Zeichnung näher erläutert. Darin zeigt die einzige Figur eine schematische Darstellung eines Konverters mit einer Meßeinrichtung zur optischen Temperaturbestimmung des geschmolzenen Metalls.

Die Figur zeigt einen Behälter 1 zur Aufnahme des geschmolzenen Metalls. Dieser Behälter 1 ist über Drehzapfen 2 in einem nicht dargestellten Gestell gelagert. Eine Gaszufuhr 3 führt von einer nicht näher dargestellten Gasquelle über eine Gasleitung 8 zu einer im Bodenbereich des Behälters 1 vorgesehenen Gasöffnung. Über die Gaszuführung 3 kann dem Metallbad 9 Gas zugeführt werden.

Ferner dargestellt sind eine Abspulvorrichtung 4, auf der ein Lichtwellenleiter 7 aufgespult ist. Ein Ende des Lichtwellenleiters 7 ist mit einem optischen Sensor 5 verbunden, der mit einer Signalauswertung 6 verbunden ist. Die Abspulvorrichtung 4 und der optische Detektor 5 können in einer vor Wärme schützenden Einhausung 10 untergebracht sein. Der Lichtwellenleiter 7 wird durch die Gasleitung 8, welche mittels der Gaszuführung 3 mit Gas versorgt wird, in das Metallbad eingeführt.

Das in das Metallbad 9 hineinreichende Ende des Lichtwellenleiters 7 nimmt die Strahlung des geschmolzenen Metalls auf und leitet sie über den Lichtwellenleiter 7 zu dem optischen Sensor 5. Dort werden die optischen Signale in elektronische Signale umgewandelt, die von der Signalauswertung 6 weiter bearbeitet werden können, um die Temperatur des Metalls im Metallbad 9 zu ermitteln. Da die Temperatur des geschmolzenen Metalls zum Schmelzen des eingetauchten Ende des Lichtwellenleiters führt, muß der Lichtwellenleiter nachgeführt werden. Dies erfolgt mit Hilfe des durch die Gaszuführung 3 und die Gasleitung 8 strömenden Gases.

## Patentansprüche

1. Konverter mit einem Behälter (1) zur Aufnahme geschmolzenen Metalls und einer Meßvorrichtung zur optischen Temperaturbestimmung des geschmolzenen Metalls mit
- einem Lichtwellenleiter (7), um von dem Metall oder von der Spitze des Lichtwellenleiters emittierte elektromagnetische Strahlung zu einem optischen Detektor zu leiten,
- einem optischen Detektor zur Bestimmung der Temperatur des Metalls aus einer Analyse der elektromagnetischen Strahlung,
- einer zwischen dem optischen Detektor und dem Behälter (1) angeordneten fluiddurchströmten Leitung, in der der Lichtwellenleiter (7) zumindest abschnittweise geführt wird und in der der Lichtwellenleiter mit Hilfe des Fluids transportiert wird,
**dadurch gekennzeichnet, daß** der optische Detektor beabstandet von dem Behälter in einem Bereich angeordnet ist, in der die Umgebungstemperatur weniger als 150°C beträgt, der Lichtwellenleiter (7) Oberflächeneigenschaften hat, die eine besonders gute Übertragung der Transportkräfte des Fluids auf den Lichtwellenleiter erlauben, wobei der Lichtwellenleiter (7) in der fluiddurchströmten Leitung (8) durch das Fluid transportiert wird.

2. Konverter nach Anspruch 1, **gekennzeichnet durch** eine Abspulvorrichtung (4), die den Lichtwellenleiter (7) sukzessive von einem Vorrat abspult und die ebenfalls in einem Bereich angeordnet ist, in der die Umgebungstemperatur weniger als 150°C beträgt.

3. Konverter nach einem der Ansprüche 1 oder 2, **gekennzeichnet durch** eine wärmegeschützte Einhausung (10) für den optischen Detektor.

4. Konverter nach einem der Ansprüche 1 bis 3, **gekennzeichnet durch** eine wärmegeschützte Einhausung (10) für die Abspulvorrichtung (4).

5. Konverter nach einem der Ansprüche 1 bis 4, **gekennzeichnet durch** mindestens eine Gasleitung (8), mit der Gas zur Behandlung des geschmolzenen Metalls in den Behälter (1) eingebracht, in der der Lichtwellenleiter (7) zumindest abschnittweise geführt und in der der Lichtwellenleiter durch das Gas transportiert wird.

6. Konverter nach Anspruch 5, **dadurch gekennzeichnet, daß** der Lichtwellenleiter (7) über eine Einführöffnung in der Gasleitung (8) in diese eingeführt wird, und daß die Einführöffnung im Bereich einer Gasquelle angeordnet ist, von der Gas in die Gasleitung eingespeist wird.

7. Konverter nach einem der Ansprüche 1 bis 6, **gekennzeichnet durch** Zapfen (2), an denen der Behälter (1) schwenkbar aufgehängt ist und durch die die fluiddurchströmte Leitung (8) geführt ist.

8. Verfahren zur optischen Temperaturmessung an einem Konverter nach einem der Ansprüche 1 bis 7, wobei der Lichtwellenleiter (7) dem Behälter (1) zugeführt wird und dabei zumindest abschnittweise durch die zwischen dem optischen Detektor und dem Behälter (1) angeordnete fluiddurchströmte Leitung mit Hilfe des Fluids transportiert wird und mit dem Detektor die von dem Lichtwellenleiter von dem geschmolzenen Metall zum Detektor weitergeleiteten elektromagnetische Strahlung zur Bestimmung der Temperatur des Metalls analysiert wird, **dadurch gekennzeichnet, dass** der Lichtwellenleiter (7) Oberflächeneigenschaften hat, die eine besonders gute Übertragung der Transportkräfte des Fluids auf den Lichtwellenleiter erlauben, wobei der Lichtwellenleiter (7) in der fluiddurchströmten Leitung (8) durch das Fluid transportiert wird.

9. Verfahren nach Anspruch 8, **dadurch gekennzeichnet, daß** der Lichtwellenleiter dem geschmolzenen Metall über eine Fluidöffnung des Behälters zugeführt wird, wobei dem Behälter über diese Fluidöffnung auch ein weiteres Fluid zugeführt wird, jedoch bevor der Lichtwellenleiter in Kontakt mit dem geschmolzenen Metall kommt:
- der Lichtwellenleiter in einer noch nicht eingetauchten Position gehalten wird,
- die durch den so gehaltenen Lichtwellenleiter zum Detektor weitergeleitete elektromagnetische Strahlung vom Detektor analysiert wird und/oder der Druckverlauf des weiteren Fluids, das durch die Fluidöffnung dem Behälter zugeführt wird, gemessen wird, und
- der Transport des so gehaltenen Lichtwellenleiters in das geschmolzene Metall erst begonnen wird, wenn der gemessene Wert einem vorgegebenen Startwert entspricht bzw. die gemessenen Werte vorgegebenen Startwerten entsprechen.

10. Verfahren nach Anspruch 9, **dadurch gekennzeichnet, daß** die Messung intermittierend durchgeführt und der Transport des Lichtwellenleiters intermittierend durchgeführt wird und vor jeder neuen Messung der Transport des in einer noch nicht eingetauchten Position gehaltenen Lichtwellenleiters erst begonnen wird, wenn der gemessene Wert einem vorgegebenen Startwert entspricht bzw. die gemessenen Werte vorgegebenen Startwerten entsprechen.

11. Verfahren nach einem der Ansprüche 8 bis 10, **dadurch gekennzeichnet, daß** dem geschmolzenen Metall über eine Bodengasöffnung Bodengas zugeführt wird und die Zusammensetzung des Bodengas für einen Zeitraum vor und/oder während der Messung mit Sauerstoff angereichert wird.

## Claims

1. Converter with a container (1) for receiving molten metal and a measuring device for optical temperature determination of the molten metal, with
- a light wave conductor (7), for guiding electromagnetic radiation emitted by the metal or by the tip of the light wave emitter to an optical detector,
- an optical detector for determining the temperature of the metal from an analysis of the electromagnetic radiation,
- a fluid perfused line arranged between the optical detector and the container (1), in which the light wave conductor (7) is guided at least in sections and in which the light wave conductor is transported with the aid of the fluid,
**characterised in that** the optical detector is arranged at a distance from the container in an area in which the ambient temperature is less than 150°C and the light wave conductor (7) has surface characteristics that allow a particularly good transmission of the transport forces of the fluid to the light wave conductor, wherein the light wave conductor (7) is transported in the fluid perfused line (8) by the fluid.

2. Converter according to claim 1, **characterised by** an unwinding device (4) that successively unwinds the light wave conductor (7) from a store, and that is also arranged in an area in which the ambient temperature is less than 150°C.

3. Converter according to one of the claims 1 or 2, **characterised by a** heat-protected housing (10) for the optical detector.

4. Converter according to one of the claims 1 to 3, **characterised by** a heat-protected housing (10) for the unwinding device (4).

5. Converter according to one of the claims 1 to 4, **characterised by** at least one gas line (8), with which gas for treating the molten metal is supplied into the container (1), in which the light wave conductor (7) is guided at least in part, and in which the light wave conductor is transported through the gas.

6. Converter according to claim 5, **characterised in that** the light wave conductor (7) is introduced into the gas line (8) via an inlet opening in the same, and **in that** the inlet opening is arranged in the area of a gas source, from which gas is fed into the gas line.

7. Converter according to one of the claims 1 to 6, **characterised by** spigots (2), on which the container (1) is pivotably suspended and through which the fluid perfused line (8) is guided.

8. Method for optical temperature measurement at a converter according to one of the claims 1 to 7, wherein the light wave conductor (7) is supplied to the container (1) and is transported at least in part through the fluid perfused line arranged between the optical detector and the container (1) with the aid of the fluid here, and the electromagnetic radiation forwarded from the molten metal to the detector by the light wave conductor is analysed by said detector for determining the temperature of the metal, **characterised in that** the light wave conductor (7) has surface characteristics that allow a particularly good transmission of the transport forces of the fluid to the light wave conductor, wherein the light wave conductor (7) is transported through the fluid in the fluid perfused line (8).

9. Method according to claim 8, **characterised in that** the light wave conductor is supplied to the molten metal via a fluid opening of the container, wherein the container is also supplied with a further fluid via this fluid opening, although prior to the light wave conductor coming into contact with the molten metal:
- the light wave conductor is held in a not yet submersed position,
- the electromagnetic radiation forwarded to the detector by the light wave conductor held in this way is analysed by the detector and/or the pressure development of the further fluid, supplied to the container through the fluid opening, is measured, and
- the transport of the light wave conductor held in this way into the molten metal will commence only once the measured value equals a predetermined start value, or the measured values equal the predetermined start values.

10. Method according to claim 9, **characterised in that** the measurement is carried out intermittently and the transport of the light wave conductor is carried out intermittently, and the transport of the light wave conductor held in a not yet submersed position will commence prior to each new measurement only once the measured value equals a predetermined start value or the measured values equal predetermined start values.

11. Method according to one of the claims 8 to 10, **characterised in that** floor gas is supplied to the molten metal via a floor gas opening and the composition of the floor gas is enriched with oxygen for a period prior to and/or during the measurement.

## Revendications

1. Convertisseur pourvu d'un contenant (1) pour la réception de métal fondu et d'un dispositif de mesure pour détermination optique de la température du métal fondu avec
- un conducteur d'onde lumineuse (7), pour conduire un rayonnement électromagnétique émis par le métal ou depuis la pointe du conducteur d'onde lumineuse à un détecteur optique,
- un détecteur optique pour déterminer la température du métal à partir d'une analyse du rayonnement électromagnétique,
- une conduite parcourue par le fluide, disposée entre le détecteur optique et le contenant (1), conduite dans laquelle le conducteur d'onde lumineuse (7) est guidé au moins par sections et conduite laquelle le conducteur d'onde lumineuse est transporté à l'aide du fluide,
**caractérisé en ce que** le détecteur optique est espacé du contenant dans une zone dans laquelle la température ambiante est inférieure à 150°C, que le conducteur d'onde lumineuse (7) présente des propriétés de surface permettant un transport particulièrement bon des forces de transport du fluide sur le conducteur d'onde lumineuse, tandis que le conducteur d'onde lumineuse (7) est transporté par le fluide dans la conduite parcourue par le fluide (8).

2. Convertisseur selon la revendication 1, **caractérisé par** un dispositif de rinçage (4), qui rince le conducteur d'onde lumineuse (7) successivement de toute réserve et qui est disposé dans une zone dont la température ambiante est inférieure à 150°C.

3. Convertisseur selon l'une quelconque des revendications 1 ou 2, **caractérisé par** un logement protégé thermiquement (10) pour le détecteur optique.

4. Convertisseur selon l'une quelconque des revendications 1 à 3, **caractérisé par** un logement protégé thermiquement (10) pour le dispositif de rinçage (4).

5. Convertisseur selon l'une quelconque des revendications 1 à 4, **caractérisé par** au moins une conduite de gaz (8), avec laquelle le gaz est introduit dans le contenant (1) pour le traitement du métal fondu, conduite dans laquelle le conducteur d'onde lumineuse (7) est guidé au moins en sections et dans laquelle le conducteur d'onde lumineuse est transporté à travers le gaz.

6. Convertisseur selon la revendication 5, **caractérisé en ce que** le conducteur d'onde lumineuse (7) est introduite par le biais d'une ouverture d'introduction dans la conduite de gaz (8) dans cette dernière et que l'ouverture d'introduction est disposée dans la zone d'une source de gaz à partir de laquelle du gaz est injecté dans la conduite de gaz.

7. Convertisseur selon l'une quelconque des revendications 1 à 6, **caractérisé par** un tourillon (2) au niveau duquel le contenant (1) est suspendu de manière pivotante et à travers lequel est guidée la conduite parcourue de fluide (8).

8. Procédé de mesure de température optique au niveau d'un convertisseur selon l'une des revendications 1 à 7, où le conducteur d'onde lumineuse (7) est acheminé au contenant (1) et pour ce faire est transporté au moins par sections à travers la conduite parcourue de fluide disposée entre le détecteur optique et le contenant (1) à l'aide du fluide et le rayonnement électromagnétique transmis depuis le conducteur d'onde lumineuse depuis le métal fondu vers le détecteur est analysé avec le détecteur, pour déterminer la température du métal, **caractérisé en ce que** le conducteur d'onde lumineuse (7) présente des propriétés de surface permettant un transport particulièrement bon des forces de transport du fluide sur le conducteur d'onde lumineuse, tandis que le conducteur d'onde lumineuse (7) est transporté par le fluide dans la conduite parcourue par le fluide (8).

9. Procédé selon la revendication 8, **caractérisé en ce que** le conducteur d'onde lumineuse est acheminé au métal fondu par le biais d'une ouverture de fluide du contenant, où un autre fluide est acheminé au contenant par le biais de cette ouverture de fluide, cependant avant que le conducteur d'onde lumineuse ne vienne au contact du métal fondu :
- le conducteur d'onde lumineuse est maintenu dans une position non encore immergée,
- le rayonnement électromagnétique transmis au détecteur à travers le conducteur d'onde lumineuse ainsi maintenu est analysé par le détecteur et/ou la courbe de pression du fluide supplémentaire, fluide acheminé au contenant à travers l'ouverture de fluide, est mesurée et
- le transport du conducteur d'onde lumineuse ainsi maintenu dans le métal fondu ne commence que lorsque la valeur mesurée correspond à une valeur de départ prédéfinie ou bien lorsque les valeurs mesurées correspondent à des valeurs de départ prédéfinies.

10. Procédé selon la revendication 9, **caractérisé en ce que** la mesure est effectuée de manière intermittente et que le transport du conducteur d'onde lumineuse s'effectue de manière intermittente et avant chaque nouvelle mesure, le transport du conducteur d'onde lumineuse non encore maintenu en position immergée ne commence que lorsque la valeur mesurée correspond à une valeur de départ prédéfinie ou bien lorsque les valeurs mesurées correspondent à des valeurs de départ prédéfinies.

11. Procédé selon l'une des revendications 8 à 10, **caractérisé en ce que** du gaz naturel est acheminé au métal fondu par le biais d'une ouverture de gaz naturel et que la composition du gaz naturel est enrichie d'oxygène pour une période de temps avant et/ou pendant la mesure.
